# EUROPEAN PATENT APPLICATION

(11) **EP 2 397 035 A1**
(43) Date of publication of application: **21.12.2011**
(21) Application number: 09841507.8
(22) Date of filing: 10.09.2009
(51) Int. Cl.: A01N 59/16, A01N 59/06, A01N 59/20, A01N 61/00, A01P 3/00

(54) **ANTIBACTERIAL AGENT AND METHOD FOR USING SAME**

(30) Priority: 10.03.2009 JP 2009056622
(71) Applicant: Kaneka Corporation, Osaka-shi, Osaka 530-8288 (JP); Osaka Municipal Technical Research Institute, Osaka-shi, Osaka 536-8553 (JP)
(72) Inventor: YAMASHITA Kenji, Settsu-shi, Osaka 566-0072 (JP); OMOTO Takashi, Joto-ku, Osaka-shi, Osaka 536-8553 (JP); MORIYOSHI Kunihiko, Joto-ku, Osaka-shi, Osaka 536-8553 (JP); KAWANO Hiroaki, Joto-ku, Osaka-shi, Osaka 536-8553 (JP)
(74) Representative: Hart-Davis, Jason
(86) International application number: PCT/JP2009/065839
(87) International publication number: WO 2010/103682

(57) **Abstract**

An antibacterial agent of the present invention contains a metal-containing compound containing a metal other than aluminum, and a phosphorus-adsorbing material. A method of using an antibacterial agent of the present invention is a method for improving an antibacterial property of a metal-containing compound containing a metal other than aluminum, wherein the metal-containing compound and a phosphorus-adsorbing compound are used in combination. Thus, the present invention provides an antibacterial agent, and a method of using an antibacterial agent, wherein an antibacterial property of a metal-containing compound containing a metal other than aluminum, particularly a silver-containing compound, is improved significantly.

## Description

### Technical Field

The present invention relates to an antibacterial agent containing a metal-containing compound having an improved antibacterial property, and a method of using the antibacterial agent, wherein the metal-containing compound is a compound containing a metal other than aluminum, and particularly is a silver-containing compound.

### Background Art

It has been known for a long time that a metal, particularly silver or the like, has an antibacterial property. In order to utilize this effect more effectively, silver in the form of silver ions is held in an aluminosilicate or an ion exchange resin so that the antibacterial property continues for a long time, which also has been well known (Patent Documents 1, 2). Further, various antibacterial molded articles have been proposed that are obtained from an antibacterial polymer prepared by kneading such a silver-ion-holding aluminosilicate therein (Patent Document 3).

On the other hand, as to the antibacterial effect of silver, whereas silver ion itself is considered to have an antibacterial effect even at an extremely low concentration of several tens ppb, the actual minimum inhibitory concentration (MIC) with respect to Escherichia coli is about 100 to 500 ppm. Therefore, when silver or a silver compound is kneaded into a polymer so that an antibacterial polymer is obtained, it is necessary to add 0.4 to 5 percent by weight (wt%) of silver or a silver compound, which cannot be regarded as efficient. Besides, while some antibacterial products are widespread, it has been reported that some of the products subjected to antibacterial treatment caused inflammation of skin. Thus, a risk has been pointed out that use of an antibacterial agent at a high concentration could adversely affect human bodies. Therefore, there is an earnest demand for reducing the concentration of an antibacterial agent used.

Then, Patent Document 4 proposes a method for improving an antibacterial property of a silver-containing compound by allowing a phosphorus-containing compound to co-exist in the silver-containing compound. However, the method of Patent Document 4 has a problem of insufficient improvement of the antibacterial property.

### Prior Art Document

### Patent Document

Patent Document 1: JP S60(1985)-181002A
Patent Document 2: JP S58(1983)-156074A
Patent Document 3: JP S61(1986)-138658A
Patent Document 4: JP 2847529 B

### Disclosure of Invention

### Problem to be Solved by the Invention

To solve the above-described conventional problems, the present invention provides an antibacterial agent containing a metal-containing compound having a significantly improved antibacterial property, and a method of using the antibacterial agent, wherein the metal-containing compound is a compound containing a metal other than aluminum, particularly a silver-containing compound, and the significant improvement of the antibacterial property is achieved by mixing the metal-containing compound and a phosphorus-adsorbing material.

### Means for Solving Problem

An antibacterial agent of the present invention is **characterized in that** the antibacterial agent includes: a metal-containing compound containing a metal other than aluminum; and a phosphorus-adsorbing material.

A method of using an antibacterial agent according to the present invention is a method for improving an antibacterial property of a metal-containing compound containing a metal other than aluminum, and is characterized in the use of the metal-containing compound and a phosphorus-adsorbing compound in combination.

### Effects of the Invention

According to the present invention, a compound containing a metal other than aluminum, for example, a silver-containing compound, and a phosphorus-adsorbing material are mixed, whereby an antibacterial property originally possessed by the metal-containing compound such as a silver-containing compound can be improved significantly. Further, the antibacterial agent according to the present invention can be used, as an antibacterial polymer, in the production of various antibacterial products.

### Brief Description of Drawings

[FIG. 1] FIG. 1 is a schematic view showing an electrospinning method used for producing a regenerated collagen fiber according to an embodiment of the present invention.
[FIG. 2] FIG. 2 is an enlarged schematic view showing a spinning method using an electrospinning method according to another embodiment of the present invention.

### Description of the Invention

The conventional research regarding the antibacterial properties of silver-containing compounds has reported that a phosphorus-containing compound coexisting with a silver-containing compound contributed in the enhancement of the antibacterial property of the silver-containing compound, and thus it has been generally considered that the coexistence of phosphorus enhances the antibacterial property of a silver-containing compound. In contrast, the present invention, relating to an antibacterial agent and a method of using the same, in which a metal-containing compound such as a silver-containing compound has an improved antibacterial property, is **characterized in that** phosphorus is removed by a phosphorus-adsorbing material.

More specifically, in the present invention, a compound containing a metal other than aluminum, particularly a silver-containing compound, and a phosphorus-adsorbing material are mixed, whereby an antibacterial property possessed by the compound containing a metal other than aluminum is improved significantly. This is considered to be because, even though the antibacterial activity decreases when phosphorus and the like present in an object is bonded with metal ions such as silver ions, the antibacterial activity of the metal ions such as silver ions is improved by removal of the phosphorus by a phosphorus-adsorbing material.

The antibacterial agent of the present invention includes a compound containing a metal other than aluminum (hereinafter simply referred to as a metal-containing compound), and a phosphorus-adsorbing material.

The aforementioned metal-containing compound is not limited particularly, as long as the compound is anything other than aluminum-containing compounds. It is possible to use, for example, a metal-containing compound that contains any of the metals listed in the periodic table of elements except for aluminum, and that has an antibacterial property. From the viewpoint of an excellent antibacterial property, a compound containing a metal in Groups 10, 11, or 12 of the periodic table of elements is preferable; among these, a compound containing one or more metals selected from the group consisting of silver-containing compounds, zinc-containing compounds, and copper-containing compounds is more preferable; and among these, a silver-containing compound is particularly preferable.

Examples of the silver-containing compound include silver-containing complex salts such as silver nitrate, silver sulfate, silver perchlorate, silver acetate, silver chloride, diamine silver nitrate, and diamine silver sulfate; silver ion-carrying carriers such as silver-carrying activated carbon, silver-carrying zeolite, and silver-carrying amorphous aluminosilicate; silver-containing glass; silver-containing solid solutions; silver clusters; silver alloys; silver metal; and silver-containing minerals. The foregoing metal-containing compounds may be used alone, or two or more of them may be used in combination.

The aforementioned phosphorus-adsorbing material is not limited particularly, and it may be anything as long as it is capable of adsorbing the element of phosphorus, a phosphorus compound, such as a phosphoric acid structure material. Here, the "phosphoric acid structure material" refers to a material having a phosphoric acid skeleton such as phosphoric acid, phosphoric acid salts, and phosphoric acid esters. As the phosphorus-adsorbing material, the following can be used, for example: aluminum compounds; active carbon; ceramic-based compounds; and other metal oxides.

Examples used as the above-described other metal oxides include silver oxide, bismuth oxide, cobalt oxide, chromium oxide, dysprosium oxide, erbium oxide, gadolinium oxide, holmium oxide, indium oxide, lanthanum oxide, niobium oxide, neodymium oxide, nickel oxide, lead oxide, praseodymium oxide, samarium oxide, tin oxide, tantalum oxide, terbium oxide, yttrium oxide, ytterbium oxide, zinc oxide, and zirconium oxide. The foregoing phosphorus-adsorbing material may be used alone, or two or more of them may be used in combination.

From the viewpoint of superiority in phosphorus adsorption, aluminum compounds are preferred. Examples used as the aluminum compound include aluminum salts such as aluminum sulfate and aluminum chloride; allophane, which is an aluminum salt-containing silicic acid-based inorganic material; and aluminum salt-containing resins.

From the viewpoint of superiority in phosphorus adsorption, aluminum salt-containing resins are preferred. Examples that can be used as the aluminum salt-containing resin include an aluminum salt-containing resin that contains an aluminum salt and at least one matrix resin component selected from regenerated collagen, polyvinyl alcohol, and carboxymethyl cellulose, wherein the aluminum salt is chemically bonded to the matrix component.

As the aluminum salt-containing resin that contains the regenerated collagen and aluminum, a regenerated collagen powder can be used. The regenerated collagen powder is obtained by preparing a soluble collagen solution from skins, bones, tendons, and the like of animals such as cows, pigs, horses, deer, rabbits, birds, and fishes, and cross-linking the soluble collage solution.

Regarding a method for producing the regenerated collagen powder, it is preferable to use a split hide as a raw material, as is disclosed in, for example, JP 2002-249982 A. The split hide is obtained from, for example, fresh split hides obtained from animals such as cows, pigs, horses, deer, rabbits, birds, and fishes, or corned rawhide of the same. Such a split hide is mostly made of insoluble collagen fibers, and it is used after flesh parts that normally adhere thereto in a net-like form are removed and salt used for preventing putrefaction and alteration is removed. The aforementioned other materials such as bones and tendons of animals also can be used in the same manner.

In the insoluble collagen fibers, impurities are present, which are lipids such as glyceride, phospholipid, and free fatty acid, and proteins other than collagen, such as glycoprotein and albumin. These impurities significantly influence qualities such as gloss and strength, and odor, when the regenerated collagen is powdered. Therefore, it is preferable that these impurities are removed preliminarily by, for example, immersing the insoluble collagen fibers in lime so as to hydrolyze fat contents in the insoluble collagen fibers and untangle the collagen fibers, and thereafter carrying out the usually-conducted leather treatments such as acid/alkali treatment, enzyme treatment, and solvent treatment.

The insoluble collagen subjected to the above-described treatments is then subjected to solubilization treatment so that cross-linked peptide portions are cut. As the solubilization treatment, the alkali solubilization, the enzyme solubilization, or the like can be applied. As the alkali solubilization, for example, the method disclosed in JP S46(1971)-15033 B can be used. In the case where the aforementioned alkali solubilization is applied, the obtained product preferably is neutralized in an acid such as hydrochloric acid.

The aforementioned enzyme solubilization has an advantage that regenerated collagen having a uniform molecular weight can be obtained, and this method preferably is adopted in the present invention. As the aforementioned enzyme solubilization, for example, the method disclosed in JP S43(1968)-25829 B, or the method disclosed in JP S43(1968)-27513 B can be used. Further, the alkali solubilization and the enzyme solubilization may be used in combination.

In the case where the regenerated collagen having been subjected to such solubilization treatment is subjected further to an operation such as pH adjustment, salting-out, water washing, and solvent treatment, it is possible to obtain regenerated collagen having excellent qualities. Therefore, such treatments preferably are carried out. The soluble regenerated collagen obtained is dissolved with an acidic solution having pH adjusted to be 2 to 4.5 with an acid such as hydrochloric acid, acetic acid, or lactic acid, so that a liquid concentrate of the same having a predetermined concentration of, for example, about 1 to 15 wt%, or preferably about 2 to 10 wt% should be obtained.

The obtained aqueous solution of the soluble regenerated collagen may be deaerated by stirring under reduced pressure as required, and filtrated so that fine dust as water-insoluble matters should be removed. Besides, a suitable amount of an additive such as a stabilizer, a water-soluble polymer compound, or the like may be added to the obtained aqueous solution of the soluble regenerated collagen as required for the purpose of, for example, the improvement of mechanical strength, the improvement of water resistance and heat resistance, the improvement of gloss, the improvement of spinnability, the prevention of coloration, and preservation.

The obtained aqueous solution of the soluble regenerated collagen is subjected to wet spinning or electrospinning, whereby regenerated collagen fibers can be formed.

### <Wet spinning>

The aqueous solution of the soluble regenerated collagen is, for example, discharged via a spinning nozzle into an aqueous inorganic salt solution, whereby regenerated collagen fibers can be formed. As the aqueous inorganic salt solution, for example, an aqueous solution of a water-soluble inorganic salt such as sodium sulfate, sodium chloride, or ammonium sulfate is used. Normally, the concentration of such an inorganic salt is adjusted to 10 to 40 wt%. The pH of the aqueous inorganic salt solution preferably is adjusted by adding a metal salt such as sodium borate or sodium acetate, hydrochloric acid, boric acid, acetic acid, or sodium hydroxide, so that normally it has a pH of 2 to 13, or preferably a pH of 4 to 12.

When the pH is in the above-described range, peptide bonds of collagen are easily hydrolyzed, whereby intended regenerated collagen fibers can be obtained. The temperature of the aqueous inorganic salt solution is not limited particularly, but normally it is desirable that the temperature is at 35°C or below. When the temperature is at 35°C or below, the soluble collagen does not denature, and the strength thereof can be maintained at a high level, whereby stable production is enabled. It should be noted that the lower limit of the temperature is not limited particularly, but usually it may be adjusted appropriately according to the solubility of the inorganic salt.

Subsequently, a free amino group of the obtained regenerated collagen is modified with an alkyl group having a hydroxyl group or an alkoxy group at the β- or γ-position and having a carbon main chain with 2 to 20 carbon atoms ("having a carbon main chain with ... carbon atoms" is hereinafter also simply referred to as "having ... carbon atoms"). The number of carbon atoms of a carbon main chain indicates the number of carbon atoms of a continuous carbon chain of an alkyl group bonded with an amino group, and the number of carbon atoms present with another atom being interposed therebetween is not considered. As the reaction for modifying the free amino group, the well-known reaction of alkylating an amino group may be used. From the viewpoint of the reactivity and the easy handling after the reaction, the alkyl group having a hydroxyl group or an alkoxy group at the β-position and having a carbon main chain with 2 to 20 carbon atoms preferably is the compound expressed by Formula (2) shown below:

-CH₂-CH(OX)-R (2)

where R represents a substituent group represented as R¹⁻, R²-O-CH₂-, or R²-COO-CH₂-, R¹ in the foregoing substituent group represents either a hydrocarbon group having 2 or more carbon atoms or CH₂Cl, R² represents a hydrocarbon group having 4 or more carbon atoms, and X represents a hydrogen atom or a hydrocarbon group.

Preferable examples of the compound of Formula (2) above include a glycidyl group, 1-chloro-2-hydroxypropyl group, and 1,2-dihydroxypropyl group. In addition, preferable examples also include a structure in which a glycidyl group is added to a free amino group in collagen. Further, preferable examples also include a structure in which an epoxy compound used is added by ring-opening addition and/or ring-opening polymerization, in a manner such that the starting point thereof is a hydroxyl group included in the alkyl group mentioned as the preferable group described above, wherein the terminal structure of the addition and/or polymerization has the structure of the aforementioned alkyl group.

Examples of the amino acid constituting the free amino group of the regenerated collagen include lysine and hydroxylysine. Further, the amino acid constituting collagen in general is present in arginine, but an amino group of ornithine, generated due to hydrolysis partially proceeding during hydrolysis under alkaline conditions for obtaining the regenerated collagen, is also alkylated. Besides, the reaction proceeds also due to secondary amine contained in histidine.

The ratio of modification of free amino groups can be determined by amino acid analysis, and it is calculated based on an amino acid analysis value of regenerated collagen fibers before alkylation, or based on an already known composition of free amino acids constituting collagen used as a raw material. It should be noted that, as to the modification of amino groups in the present invention, 50 % or more of free amino groups may have the structure modified by an alkyl group having a hydroxyl group or an alkoxy group at the β- or γ-position and having 2 or more carbon atoms, and the other free amino groups may remain the free amino groups, or alternatively have a structure modified with other substituent groups. The ratio of modification of free amino acids of regenerated collagen may be 50 % or more, more preferably 65 % or more, and particularly preferably 80 % or more. If the ratio of modification is low, it is likely that excellent heat resistant characteristics are not achieved.

Here, in the modification of free amino groups, normally one molecule of an alkylating agent reacts on one free amino group. Needless to say, 2 or more molecules of the same may react on one free amino group. Further, an intramolecular or intermolecular cross-linking reaction may occur via a hydroxyl group, alkoxy group, or another functional group present at the β-position or γ-position of an alkyl group bonded to the free amino group. Examples of the alkylation reaction include an addition reaction of an epoxy compound; an addition reaction of an aldehyde compound having a hydroxyl group or a derivative thereof at the α-position or β-position, and a reduction reaction following thereto; and a substitution reaction of a halide, alcohol, or amine having a hydroxyl group or an alkoxy group at the β-position or γ-position and having 2 or more carbon atoms. The alkylation reaction, however, is not limited to these.

In the present invention, examples of an organic compound that can be used as an alkylating agent include aldehydes, epoxies, and phenol derivatives. Among these, epoxy compounds are preferred since a modification reaction caused by epoxy compounds exhibit excellent characteristics regarding reactivity and easy processing conditions. Particularly, mono-functional epoxy compounds are preferred.

Specific examples of the mono-functional epoxy compound include, but are not limited to, olefin oxides such as ethylene oxide, propylene oxide, butylene oxide, isobutylene oxide, octene oxide, styrene oxide, methylstyrene oxide, epichlorohydrin, epibromohydrin, and glycidol; glycidyl ethers such as glycidyl methyl ether, butyl glycidyl ether, octyl glycidyl ether, nonyl glycidyl ether, undecyl glycidyl ether, tridecyl glycidyl ether, pentadecyl glycidyl ether, 2-ethyl hexyl glycidyl ether, allyl glycidyl ether, phenyl glycidyl ether, cresyl glycidyl ether, t-butylphenyl glycidyl ether, dibromo phenyl glycidyl ether, benzyl glycidyl ether, polyethylene oxide glycidyl ether; glycidyl esters such as glycidyl formate, glycidyl acetate, glycidyl acrylate, glycidyl methacrylate, and glycidyl benzoate; and glycidyl amides.

Among the mono-functional epoxy compounds, a mono-functional epoxy compound represented by the following general formula (1) preferably is used, because the water absorption ratio of regenerated collagen decreases.

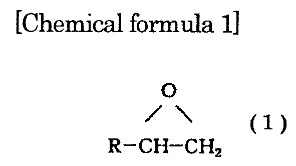

In the formula (1), R represents a substituent group represented as R¹-, R²-O-CH₂-, or R²-COO-CH₂-, R¹ represents either a hydrocarbon group having 2 or more carbon atoms or CH₂Cl, and R² represents a hydrocarbon group having 4 or more carbon atoms.

The regenerated collagen fibers thus obtained are swelled with water or an aqueous inorganic salt solution. It is favorable that this swelled material contains water or the aqueous inorganic salt solution in an amount of 4 to 15 times the weight of the regenerated collagen. When the content of water or the aqueous inorganic salt solution is 4 times or more, the content of aluminum salt in the regenerated collagen becomes high, and a sufficient water resistance is obtained. When the content is 15 times or less, the strength does not lower, and excellent handleability is obtained.

The swelled regenerated collagen then is immersed in an aqueous aluminum salt solution. The aluminum salt preferably is a basic aluminum chloride or basic aluminum sulfate represented by the following formula: Al(OH)ₙCl₃₋ₙ, or Al₂(OH)₂ₙ(SO₄)₃₋ₙ, where n is 0.5 to 2.5. Specifically, examples that can be used include aluminum sulfate, aluminum chloride, and alum. These aluminum salts can be used alone or in combination of two or more.

The concentration of aluminum salt in the aqueous aluminum salt solution preferably is 0.3 to 5 wt% in terms of aluminum oxide. When the concentration of aluminum salt is 0.3 wt% or more, the content of aluminum salt in the regenerated collagen fibers is high and a sufficient water resistance is obtained. When the content of aluminum salt is 5 wt% or less, the fibers thus treated do not become hard, and has favorable handleability.

The pH of the aforementioned aqueous aluminum salt solution is adjusted to usually 2.5 to 5 using, for example, hydrochloric acid, sulfuric acid, acetic acid, sodium hydroxide, sodium carbonate or the like. When the pH is 2.5 or more, the structure of collagen can be maintained favorably When the pH is 5 or less, precipitation of aluminum salt does not occur, and the solution will permeate uniformly. It is preferable that the pH first is adjusted to 2.2 to 3.5 so as to allow the aqueous aluminum salt solution to permeate sufficiently into the regenerated collagen, and after that, for example, sodium hydroxide, sodium carbonate or the like is added thereto so as to adjust the pH to 3.5 to 5, whereby the treatment is finished.

When a highly basic aluminum salt is used, only the first pH adjustment to 2.5 to 5 may be performed. Though the temperature of the aqueous aluminum salt solution is not limited particularly, it preferably is 50°C or lower. When the solution temperature is 50°C or lower, denaturation or alteration of the regenerated collagen does not occur easily.

The time during which the regenerated collagen fibers are immersed in the aqueous aluminum salt solution is 3 hours or more, and preferably 6 to 25 hours. With an immersion time of at least 3 hours, the reaction of the aluminum salt proceeds, and regenerated collagen with a sufficient water resistance can be obtained. There is no particular limitation on the upper limitation for the immersion time, but the reaction of the aluminum salt proceeds sufficiently within 25 hours, and a favorable water resistance is obtained as well. In order to prevent the aluminum salt from being absorbed too quickly into the regenerated collagen thereby making the concentration nonuniform, an inorganic salt such as sodium chloride, sodium sulfate, or potassium chloride may be added to the aqueous aluminum salt solution as appropriate.

The regenerated collagen fiber that has been treated with an aluminum salt and cross-linked as described above then is subjected to water washing, oiling and drying. The regenerated collagen fibers thus obtained have little color, unlike the collagen fibers obtained by a conventional method of treatment with a chromium salt, and also have a superior water resistance. Generally speaking, in order to prevent collagen from denaturation (gelatinization), attention should be directed to the temperature history during processing. In order to prevent denaturation even after the collagen is cross-linked, it is necessary to control moisture and temperature during production, powdering process/product storage so as to keep them below the levels at which regenerated collagen denatures. If collagen is mostly gelatinized, characteristics thereof have changed, and thus it is difficult to make the collagen exhibit intended collagen characteristics. From the viewpoint of preventing denaturation, it is advantageous to use the above-described regenerated collagen fibers.

Upon the spinning of the soluble regenerated collagen solution, a pigment or a dye may be mixed in the solution or immediately before spinning (spin-dyeing) so as to color the fibers. As for the pigment or dye to be used, depending on applications, a pigment or dye that does not leach/separate in the spinning step can be selected, and the type and hue can be selected according to the required quality of products that employ the present invention. Besides, a filler, an aging inhibitor, a flame retardant, an antioxidant, etc. can be added as required.

### <Electrospinning>

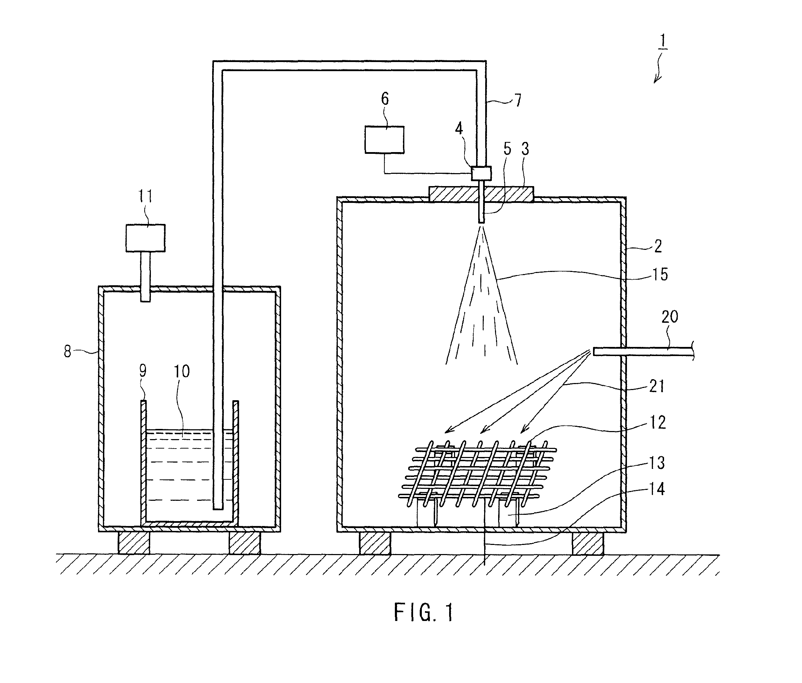

An exemplary electrospinning device used in the regenerated collagen fiber producing method of the present invention is shown in FIG. 1. An electrospinning device 1 includes an insulation plate 3 on the top of a gastight enclosure 2. On the insulation plate 3, a metal nozzle 5 connected with a metal holder 4 is fixed. A solution feed pipe 7 is connected to the metal holder 4 on a side opposite to the metal nozzle 5, and a high-voltage power supply 6 is also connected to the metal holder 4.

The solution feed pipe 7 leads to a container 9 housed in another gastight enclosure 8, and the container 9 is filled with a regenerated collagen solution 10. Further, the gastight enclosure 8 is connected with a compressor 11, and therefore it is possible to provide a pressurized state in the inside thereof. The regenerated collagen solution 10 is prepared by adding hexafluoroisopropanol to an aqueous solution of soluble regenerated collagen; for example, it is prepared so as to have a regenerated collagen content in a range of 5 wt% to 10 wt%, and a ratio by weight between water and hexafluoroisopropanol in a range of 8:2 to 5:5.

When the compressor 11 is turned on, the inside of the gastight enclosure 8 is pressurized, and the regenerated collagen solution 10 in the container 9 is fed to a metal nozzle 5 through the solution feed pipe 7. In the gastight enclosure 2, a metal net 12 is provided on insulated columns 13, and is grounded by a ground 14. Besides, the metal net 12 is disposed at a position directly under the metal nozzle 5. Here, when the high-voltage power supply 6 is turned on, a high voltage is applied to the metal nozzle 5 via the metal holder 4. Here, the high voltage causes electric charges to be induced and stored in the regenerated collagen solution 10 running through the metal nozzle 5.

After being discharged out of the metal nozzle 5, the collagen solution is charged positively, and therefore, droplets of the collagen solution act repulsively. This repulsion force opposes the surface tension of the regenerated collagen solution, and when it exceeds the charge criticality (exceeds the surface tension), the collagen solution becomes charged mist. Since the charged mist has a surface area that is significantly large with respect to its volume, water and hexafluoroisopropanol as solvent evaporates efficiently and has a decrease in the volume, thereby having a higher charge density. As a result, the collagen solution is split into charged micro-mist 15.

Here, the solvent refers to a liquid that dissolves a solid, liquid, or gaseous solute (a substance dissolved in a solvent). In addition to water, which is used most generally, various organic substances are usable also such as alcohol, acetone, and hexane. Such an organic substance is referred to as an organic solvent. In the present invention, water and hexafluoroisopropanol is used as solvent that dissolves collagen as a solute.

Since a high voltage is applied to the metal nozzle 5 and the metal net 12 is grounded, a strong electric field is formed between the metal nozzle 5 and the metal net 12. Particles of the charged micro-mist 15, while acting repulsively, go toward the metal net 12 due to the formed electric field, but water and hexafluoroisopropanol as solvent evaporate midway, and is collected on the metal net 12 as fibered regenerated collagen (regenerated collagen fibers). Here, electric charges having a polarity opposite to electric charges imparted to the metal nozzle 5 may be imparted to the metal net.

It should be noted that the metal nozzle 5 has an inner diameter of, preferably, 0.1 to 2.0 mm, and more preferably, 0.1 to 1.0 mm. The voltage applied to the metal holder 4 (and the metal nozzle 5) preferably is a direct voltage of 1 to 50 kV, and more preferably a direct voltage of 10 to 35 kV It is preferable that the speed at which the regenerated collagen solution is discharged from the metal nozzle 5 is 0.01 mL/min to 10 mL/min. This discharge speed can be adjusted by controlling the output of the compressor 11 pressurizing the gastight enclosure 8.

It should be noted that here all of the holder, the nozzle, and the net are made of metal, but they are not limited to metal-made ones, and may be anything as long as they are made of conductive materials. Besides, the gastight enclosure 2 may not be used, and the electrospinning of the regenerated collagen solution may be performed in an open system.

The aforementioned aqueous aluminum salt solution 21 is sprayed over the regenerated collagen fibers collected on the metal net 12. The regenerated collagen fibers, with the aqueous aluminum salt solution 21 sprayed thereover, become aluminum-cross-linked.

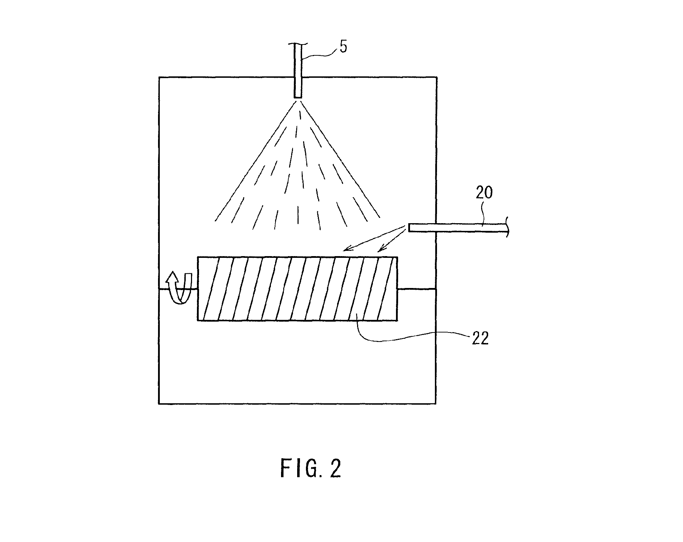

FIG. 2 illustrates an example in which a cylinder 22 is used in place of the metal net. The regenerated collagen fibers discharged from the metal nozzle are wound up on the cylinder 22, while simultaneously an aqueous aluminum salt solution is sprayed thereover from the spray nozzle 20, whereby the regenerated collagen fibers are aluminum-cross-linked.

Further, the regenerated collagen fibers obtained by the above-described electrospinning may be modified with alkyl, and thereafter, cross-linked with use of an aluminum salt, in the same manner as the case of the regenerated collagen fibers obtained by the above-described wet spinning.

In the present invention, the content of aluminum as a metal element in the generated collagen fibers preferably is in a range of 0.4 wt% to 70 wt%. The foregoing content more preferably is in a range of 0.5 wt% to 50 wt%, and particular preferably in a range of 1 wt% to 40 wt%.

In the present invention, the quantity of aluminum as a metal element is determined by atomic absorption analysis after wet oxidation decomposition of a fiber or powder. In the case of a film, the determination can be carried out by the same method as above. It should be noted that "aluminum as a metal element" refers exclusively to aluminum atoms and an aggregate of the same.

The regenerated collagen fibers preferably have a diameter in a range of 50 nm to 100 µm. More preferably, the diameter is in a range of 100 nm to 20 µm. With such a small fineness, the fibers have a greater specific surface area, and therefore, exhibit excellent phosphorus adsorption.

In the present invention, the regenerated collagen fibers are pulverized, whereby a collagen powder made of aluminum-cross-linked regenerated collagen (regenerated collagen powder) is obtained. In the case where the regenerated collagen is in a fiber form or a film form, it is cut so as to have a fiber length or a size suitable for pulverization; or the collagen fibers or film thus cut is further pulverized; or alternatively, the fibers or film is pulverized directly. Thus, a regenerated collagen powder is obtained.

The cutter usable in the production of the regenerated collagen powder is not limited particularly For example, the fibers or film is cut into approximately 0.1 mm to several mm using a cutter that is used conventionally to cut fibers, such as a blade rotary cutter, belt cutter, shearing machine or cutter mill. The fibers or film thus cut is pulverized into fine particles with a pulverizing machine, for example, a shearing mill such as a roller mill, rod mill, ball mill (dry type, wet type), jet mill, pin mill, vibration mill, centrifugal (CF) mill, planetary ball mill or grinder mill, or pulverized into ultra-fine particles with a medium agitation type ultra-fine pulverizing machine or the like.

From the viewpoint of preventing the ball material from mixing in powder and achieving pulverization efficiency, it is preferable to use hard balls such as zirconia balls. It is also possible to use balls of other materials such as alumina balls. As another pulverization method, freeze pulverization can be used as well. The obtained regenerated collagen powder preferably has an average particle size of 0.01 to 80 µm.

It is preferable that the content of aluminum in the above-described regenerated collagen powder is in a range of 0.1 to 70 wt%, more preferably in a range of 0.2 to 50 wt%, and particularly preferably in a range of 1 to 40 wt% in terms of aluminum as a metal element.

As for the particle size of the regenerated collagen powder, a particle size of approximately 0.1 to several mm exhibits an phosphorus adsorption property, but it is preferable that it is pulverized into a fine powder having an average particle size of 0.01 to 80 µm, since in this case the phosphorus adsorption property is improved further. From the viewpoint of touch, the average particle size preferably is in a range of 1 to 20 µm, and more preferably 1 to 10 µm. When the average particle size exceeds the above-described range, a surface coated with the antibacterial agent provides a textured touch, which is not preferable. When the average particle size is 1 µm or more, excellent handleability is achieved.

The particle size of the obtained regenerated collagen powder may be appropriately adjusted by varying the type of the pulverizer and the pulverization time. For example, the use of the vibration mill for 1 hour to several tens of hours allows the production of a regenerated collagen powder with an average particle size of about 5 to 80 µm, and the pulverized regenerated collagen powder may be further classified so that a powder having an average particle size of 0.01 to 5 µm should be obtained. The classification may be either air classification or water classification.

It is preferable that the average particle size of the regenerated collagen powder thus classified is 10 µm or less, and 95 wt % of the particles have particle sizes of 50 µm or less. It is more preferable that the average particle size thereof is 5 µm or less, and 95 wt % of the particles have particle sizes of 20 µm or less. Within these ranges, an article coated with the antibacterial agent can provide a smooth touch, and good moisture absorption/desorption properties.

The particle size distribution and the average particle size can be measured using a commercially available particle size distribution analyzer. The measurement can be performed using, for example, Microtrac particle size distribution analyzer (MT3300 available from Nikkiso Co., Ltd.) by laser diffraction/scattering method, or the like. Methanol, for example, is used as a dispersion medium. The particle refractive index used is 1.44, which is the refractive index of collagen.

The regenerated collagen powder has excellent warm/cool touch. The warm/cool touch is a sensitivity factor (touch) indicative of warmness (coolness) of a material, and usually the surface differential heat (Qmax) is used as an index. A PVC leather exhibits a large value of Qmax, that is, has a greater heat transfer, thereby providing a cool touch. A real leather exhibits a smaller value of Qmax, thereby providing a warm touch. A sheet that is coated with the above-described regenerated collagen powder, thereby containing collagen having the same composition as that of a real leather, exhibits a smaller value of surface differential heat (Qmax) than that of a PVC leather, and therefore provides a "warm" touch, which is closer to the touch of a real leather.

The regenerated collagen powder is sufficiently purified at a regenerated collagen fiber production stage and impurities are removed. Therefore, the powder exhibits a high degree of whiteness, and is less yellowish.

In the present invention, carboxymethyl cellulose and polyvinyl alcohol are used as matrix resin components for an aluminum salt-containing resin. Carboxymethyl cellulose and polyvinyl alcohol before being cross-linked are also matrix resin gel components soluble in water, and when they are brought into contact with an aluminum salt, they are cross-linked and the aluminum salt is chemically bonded with gel components of the resin, whereby the resin is converted to a water insoluble resin. More specifically, since carboxymethyl cellulose has a -COOH group and an -OH group, it can be cross-linked with use of an aluminum salt. Further, since polyvinyl alcohol has an -OH group, it can be cross-linked with use of an aluminum salt. As polyvinyl alcohol, polyvinyl alcohol into which a -COOH group is introduced may be used. The amount of the -COOH group introduced may be, for example, about 0.1 to 5 percent by mole (mol%).

As the carboxymethyl cellulose, for example, "carboxymethyl cellulose sodium salt" available from SIGMA Corporation can be used. As the polyvinyl alcohol, for example, "anion-modified PVA (A series)" (grade: AF17) available from Japan VAM and POVAL Co., Ltd. can be used.

The fiberization and the powderization of the aforementioned carboxymethyl cellulose and the aforementioned polyvinyl alcohol may be performed by the same means as those of the fiberization and the powderization of the aforementioned regenerated collagen.

In the present invention, the phosphorus-adsorbing material may be allophane (hydrated alumino-silicate mineral).

The form of the antibacterial agent of the present invention may be a liquid form, an emulsion form, a suspension form, a powder form, a gel form, a granular form, a paper form, a pellet form, a shaped form such as a sheet or a film, a spray form, a porous form, or a fibrous form; or alternatively, the form may be the above-described form combined with a carrier such as a nonwoven fabric, a foamed sheet, paper, plastics, or an inorganic material plate.

In the antibacterial agent of the present invention, the content of the aforementioned metal-containing compound preferably is 0.0001 to 99.9 wt%, more preferably 0.0001 to 10 wt%, and particularly preferably 0.0001 to 1 wt% with respect to the total weight of the antibacterial agent. Further, the content of the aforementioned silver-containing compound preferably is 0.0001 to 99.9 wt%, more preferably 0.0001 to 10 wt%, and particularly preferably 0.0001 to 1 wt% with respect to the total weight of the antibacterial agent. The antibacterial agent containing the metal-containing compound or the silver-containing compound in the aforementioned respective range exhibits an excellent antibacterial effect, and has no risk of adversely affecting a human body or the like.

In the antibacterial agent of the present invention, the content of the aforementioned phosphorus-adsorbing material preferably is 0.1 to 99.9999 wt%, more preferably 0.5 to 99.9 wt%, and particularly preferably 2 to 99 wt% with respect to the total weight of the antibacterial agent. The content of the aforementioned aluminum compound preferably is 0.1 to 99.9999 wt%, more preferably 0.5 to 99.9 wt%, and particularly preferably 2 to 99 wt% with respect to the total weight of the antibacterial agent. The antibacterial agent containing the phosphorus-adsorbing material or the aluminum compound in the aforementioned respective range exhibits an effective phosphorus adsorption property, and a dispersion property that is favorable for an antibacterial agent.

The content of the regenerated collagen powder preferably is 0.1 to 99.9999 wt%, more preferably 0.5 to 99.9 wt%, and particularly preferably 5 to 99 wt% with respect to the total weight of the antibacterial agent. When the content is 0.1 wt% or more, the antibacterial agent exhibits an effective phosphorus adsorption property. When the content is 99.9999 wt% or less, the antibacterial agent exhibits a dispersion property favorable for an antibacterial agent.

Further, in the antibacterial agent of the present invention, it is preferable that the content of the metal-containing compound is 0.0001 to 99.9 wt% with respect to the total weight of the antibacterial agent, and that the content of the phosphorus-adsorbing material is 0.1 to 99.9999 wt% with respect to the total weight of the antibacterial agent.

Further, in the antibacterial agent of the present invention, it is preferable that the content of the aforementioned silver-containing compound is 0.0001 to 99.9 wt% with respect to the total weight of the antibacterial agent, and that the content of the aforementioned aluminum compound is 0.1 to 99.9999 wt% with respect to the total weight of the antibacterial agent. Still further, it is preferable that the content of the aforementioned silver-containing compound is 0.0001 to 99.9 wt% with respect to the total weight of the antibacterial agent, and that the content of the aforementioned regenerated collagen powder is 0.1 to 99.9999 wt% with respect to the total weight of the antibacterial agent.

The antibacterial agent of the present invention may further contain an antibacterial agent other than the metal-containing compound, as long as it does not harm the effect of the present invention.

A method of using an antibacterial agent according to the present invention is a method of using the aforementioned metal-containing compound and the aforementioned phosphorus-adsorbing material in combination. In this using method, an object may be treated with the antibacterial agent containing the metal-containing compound and the phosphorus-adsorbing material both, or alternatively, an object may be treated with the phosphorus-adsorbing material first, and thereafter treated with the metal-containing compound. However, from the viewpoint of improving the antibacterial property, an object preferably is treated with the phosphorus-adsorbing material first, and thereafter treated with the metal-containing compound.

The antibacterial agent and the method of using the same according to the present invention may be utilized in various fields such as pharmaceutical products and antibacterial polymers. For example, they may be used in the medical field, the field of agriculture, forestry and fisheries, the cosmetic field, the food processing field, the textile and clothing field, the field of bedding, the field of construction materials, the field of ship construction, the field of electronics, and the field of water treatment. It is preferable that they are used in the following products in the respective fields: in the medical field, for example, external disinfections in various forms such as ointments, gel medications, oil suspensions, and emulsions, and disinfectants, not for humans, but for medical equipment such as disinfectants for catheters, forceps, linens, and measurement equipment; in the field of agriculture, forestry and fisheries, for example, bactericidal agents against agricultural pathogens, disinfection agents for livestock barns, and antifouling agents for fishing nets as corves; in the cosmetic field, for example, cosmetic antiseptics, and hair washes; in the food processing field, for example, equipment in food factories, working clothes, materials such as plastic and paper for packing foods, and food preservatives; in the textile and clothing field, for example, sanitary socks, training wear, hospital gowns, and surgical gowns; in the field of bedding, for example, bed covers, sheets, beddings, and blankets; in the field of construction materials, for example, coating materials for walls and floors, adhesives, furniture linings, and shower curtains; in the field of ship construction, for example, coating materials for ship bottoms, and seaweedproofing coating materials and armor paints for underwater buildings; in the field of electronics, for example, packing materials for electronic components, and bactericidal agents for chemicals for electronic industries; and in the field of water treatment, for example, bactericidal agents for water and sewerage, water cleaners, cooler fans, cooling towers, pipeworks, filter films, filters, slime controlling agents for fillers, and antiseptics for water-soluble metalworking fluids.

Examples of polymers that can be caused to become antibacterial polymers with use of the antibacterial agents and the method of using the same according to the present invention include thermoplastic or thermosetting resins such as polyethylenes, polypropylenes, vinyl chloride resins, ABS resins, nylons, polyesters, polyvinylidene chloride, polystyrenes, polyacetals, polycarbonates, acrylic resins, fluororesins, polyurethane elastomers, polyester elastomers, phenol resins, urea resins, melamine resins, unsaturated polyester resins, epoxy resins, urethane resins, and natural and synthetic rubbers. It is appropriate that the amount of the added antibacterial agent preferably is 0.01 to 3 wt%, more preferably 0.02 to 1 wt%, and particularly preferably 0.05 to 0.5 wt% with respect to the weight of the polymer.

In the case where the antibacterial agent and the method of using the same according to the present invention are utilized in a pharmaceutical, it is appropriate that the form thereof is selected in accordance with a known form of usage of a metal-containing compound such as a silver-containing compound. Examples of the form include forms for oral administration, transdermal administration, and enteral administration. Particularly, the agent may be used in an external medication form, such as an aqueous solution or a solution of alcohol or glycerol, an ointment, a cream medication, or a poultice.

Microorganisms against which the antibacterial agent and the method of using the same according to the present invention are effective are those against which metal-containing compounds, for example, silver-containing compounds, exhibit an effective antibacterial property originally, and examples of such microorganisms include most of microorganisms such as bacteria, fungi (mold), yeasts, actinomycetes, rikettsias, and viruses; the examples include Escherichia coli, Pseudomonas aeruginosa, Staphyloccocus aureus, Streptococcus faecalis, Vibrio parahaemdyticus, Candida albicans, Aspergillus flavas, Penicillium citrinum, Trichoderma viride, Propionibacterium, Chlamydia trachomatis, and Bacillus subtilis.

### Examples

Hereinafter, the present invention will be described in more detail with reference to examples, but it is to be understood that the present invention is not limited to these examples.

### Production Example 1

Bovine split hide was used as a raw material. Thirty grams of aqueous solution of hydrogen peroxide diluted to 30 wt% was introduced to 1200 kg (collagen content: 180 kg) of a hide piece solubilized with alkali, and then the hide was dissolved in an aqueous solution of lactic acid, whereby a spinning solution having a pH adjusted to 3.5 and a solid content adjusted to 7.5 wt% was produced. The spinning solution was agitated and deaerated by agitation/deaeration machine (available from Dalton Co., Ltd., model: 8DMV,) under a reduced pressure, delivered to a piston type spinning solution tank, and allowed to stand under a reduced pressure so as to be deaerated. This spinning solution was extruded by the piston, delivered in a fixed amount by a gear pump, and filtered with a sintered filter having a pore size of 10 µm. After that, the solution was passed through a spinning nozzle having 300 pores with a pore size of 0.275 mm and a pore length of 0.5 mm, and discharged at a spinning rate of 5 m/min into a 25°C coagulation bath (having a pH adjusted to 11 with boric acid and sodium hydroxide) containing 20 wt% of sodium sulfate. Thus, regenerated collagen fibers were obtained.

Then, the obtained regenerated collagen fibers (300 fibers, 20 m) were immersed in 1.32 kg of an aqueous solution containing 1.7 wt% of epichlorohydrin, 0.0246 wt% of sodium hydroxide, and 17 wt% of sodium sulfate for 4 hours at 25°C. After that, the temperature of the reaction solution was increased to 43°C to impregnate the fibers with the solution for 2 hours.

The reaction solution was removed after completion of the reaction, and then batch washing was performed three times using 1.32 kg of 25°C water in a flow type apparatus. After that, the fibers were impregnated with 1.32 kg of aqueous solution at 30°C containing 5 wt% of aluminum sulfate, 0.9 wt% of trisodium citrate salt, and 1.2 wt% of sodium hydroxide, and 13.2 g of 5 wt% aqueous solution of sodium hydroxide was added to the reaction solution 2 hours, 3 hours and 4 hours after the start of the reaction, and the reaction was continued for 6 hours in total. The reaction solution was removed after completion of the reaction, and then batch washing was performed three times using 1.32 kg of 25°C water in a flow type apparatus.

Subsequently, a part of the produced fibers was immersed in a bath filled with an oil solution made of an emulsion of amino modified silicone and a pluronic type polyether-based antistatic agent to cause the oil solution to adhere to the fibers. In a hot-air convection dryer set at 50°C, one end of the fiber bundle was fixed, and a weight, 2.8 g per fiber, was attached to the other end and suspended. The fibers thus tensed were dried for 2 hours, and regenerated collagen fibers having a total thickness of 60 dtex (decitex) were obtained.

The obtained regenerated collagen fibers were physically pulverized. Specifically, first, 2 kg of the regenerated collagen fibers were cut into pieces of a length of around 1 mm with a cutter mill SF-8 (available from Sanriki Seisakusho Co., Ltd.), and collected with a cyclone CYC-600 type (available from Sanriki Seisakusho Co., Ltd.). Next, the cut pieces were pulverized with a vibration mill (available from Token Co.). The pulverization conditions are as follows: alumina balls (diameter: 19 mm) with a filling capacity of 80% and the cut collagen fibers with a filling capacity of 40% (500 g) were placed in a 4-liter alumina container, and then pulverized for 4 to 12 hours. Consequently, the 4-hour pulverization provided a regenerated collagen powder with an average particle size of 33 µm and the 12-hour pulverization provided a regenerated collagen powder with an average particle size of 13 µm.

### Example 1

### <Preparation of Luria-Bertani culture medium>

A Luria-Bertani (LB) culture medium was prepared by adding 10 g of tryptone (available from Difco), 5 g of yeast extract (available from Difco), and 10 g of sodium chloride to 1 liter of water.

### <Preparation of LB culture media containing antibacterial agents>

Allophane as an aluminum salt-containing silicic acid-based inorganic powder was suspended in the obtained LB culture medium so that the added allophane accounted for 0.5 %, 1 %, 2 %, and 4 % [W/V: the amount (g) of added allophane with respect to the amount (100 mL) of the LB culture medium, the same applies below, too], and agitated at 30°C for 18 hours. Then, the suspensions were centrifuged (5800xg, 30 min), whereby supernatants were obtained. A silver nitrate solution, 30 µL, was added to 120 µL of each obtained supernatant so that the obtained solutions had concentrations of silver ions as shown in Table 1 below. Thus, LB culture media containing various antibacterial agents shown in Table 1 below were prepared.

### <MIC determination test>

In each of the obtained LB culture media containing the antibacterial agents, 1 µL of Escherichia coli (IFO3972), Staphyloccocus aureus (LAM12082), Pseudomonas aeruginosa (LAM1514), or Bacillus subtilis (IFO3215), which are microorganisms generally used in the evaluation of antibacterial properties, was inoculated and cultured at 27°C for 5 days. Microplates (96-well microplates, available Falcon) were used for the culturing of the microorganisms, and the growth of the microorganisms was checked by determination of absorbance at 620 nm with a microplate reader (Multisckan Ascent available from Labsystems). Determined absorbance values (absorbance values at 620 nm) are shown in Table 1 below. As the microorganisms to be inoculated, those prepared as follows were used: microorganisms of each type were cultured under agitation at 27°C for 18 hours in a 5 mL of an ordinary bouillon culture medium (available from Eiken Chemical Co., Ltd.), then, 1 mL of the same was sampled and centrifuged at 10000 rpm for 5 minutes, sediments were suspended in 1 ml of a 0.85 % saline solution, and the suspension was diluted to 100 times.

### Comparative Example 1

LB culture media containing the various antibacterial agents shown in Table 1 below, respectively, were prepared in the same manner as that in Example 1 except that the concentration of silver ions was set to 0 mg/L. Then, the MIC determination test was carried out in the same manner as that in Example 1. Results of the test are shown in Table 1 below.

### Comparative Example 2

LB culture media containing the various antibacterial agents shown in Table 1 below, respectively, were prepared in the same manner as that in Example 1 except that the added allophane was set to 0 % (W/V). Then, the MIC determination test was carried out in the same manner as that in Example 1. Results of the test are shown in Table 1 below.

### Comparative Example 3

LB culture media containing the various antibacterial agents were prepared in the same manner as that in Example 1 except that the concentration of silver ions was set to 0 mg/L and the added allophane was set to 0 % (W/V). Then, the MIC determination test was carried out in the same manner as that in Example 1. Results of the test are shown in Table 1 below.

### Comparative Example 4

LB culture media containing the various antibacterial agents shown in Table 1 below, respectively, were prepared in the same manner as that in Example 1 except that a phosphate buffer was added so that the concentration of phosphorus was adjusted to 200 mg/L. Then, the MIC determination test was carried out in the same manner as that in Example 1. Results of the test are shown in Table 1 below.

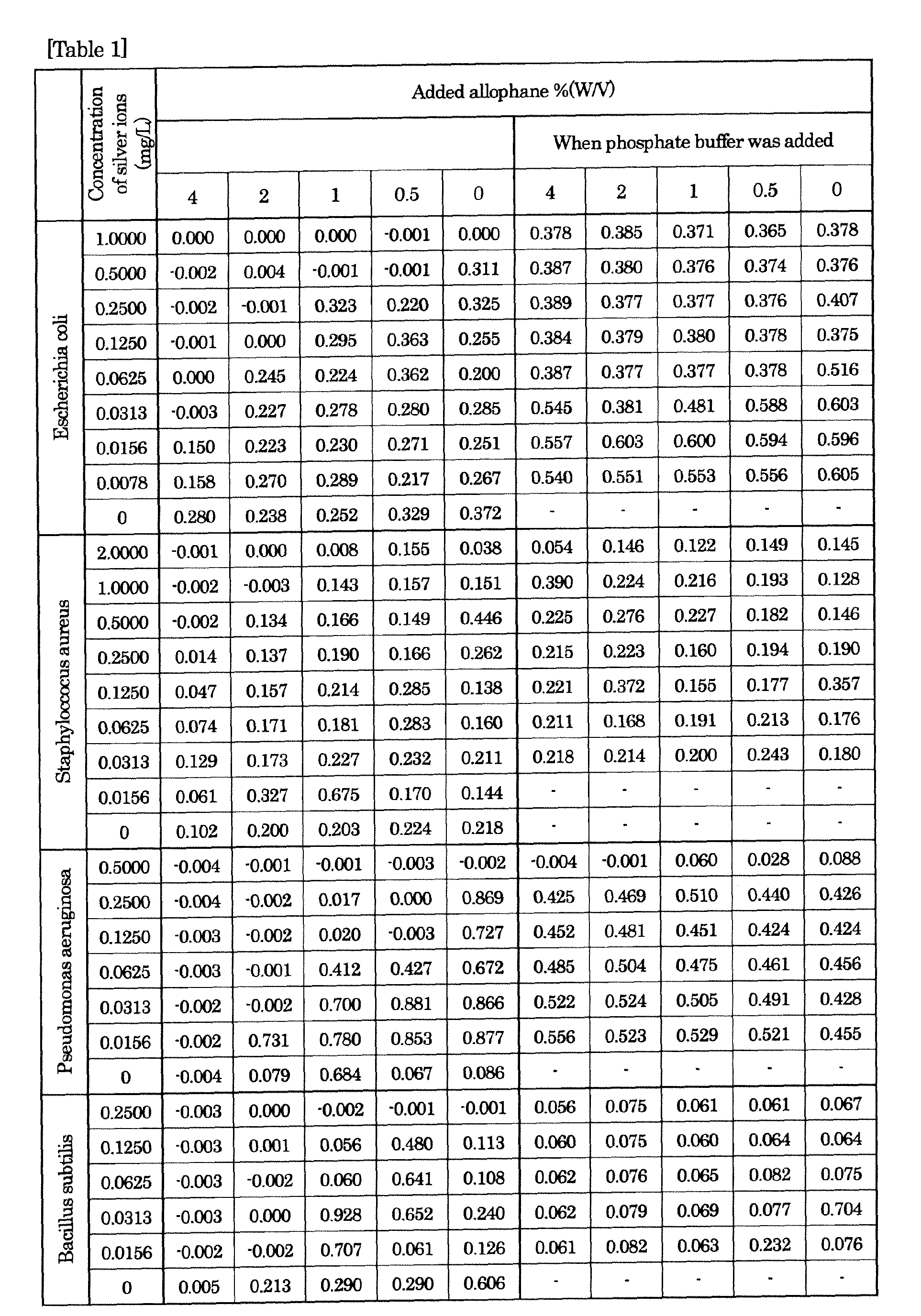

As is clear from Table 1, in the case where a phosphorus-adsorbing material, specifically allophane as an aluminum salt-containing silicic acid-based inorganic powder, was mixed, the antibacterial property of the silver-containing compound was improved. For example, as to the antibacterial property against Escherichia coli, when allophane was not contained, the MIC of silver ions was about 1 mg/L (ppm). On the other hand, when 0.5 to 1 % (W/V) of allophane was contained, the MIC of silver ions decreased to 0.5 mg/L, i.e., about 1/2; when 2 %(W/V) of allophane was contained, the MIC of silver ions decreased to 0.125 mg/L, i.e., about 1/8; and when 4 %(W/V) of allophane was contained, the MIC of silver ions decreased to 0.0313 mg/L, i.e., about 1/32. Besides, when allophane was mixed, the MICs of silver ions against Staphyloccocus aureus, Pseudomonas aeruginosa, and Bacillus subtilis decreased also, to about 1/2 to 1/16, though the decrease varied with the added amount of allophane.

On the other hand, it is clear from Table 1 that the addition of a phosphorus-containing compound, with the silver ion concentration being within the range in the experiments, did not lead to improvement of the antibacterial property of the silver-containing compound.

### Example 2

### <Preparation of LB culture medium>

An LB culture medium was prepared in the same manner as that in Example 1.

### <Preparation of LB culture media containing antibacterial agents>

Allophane as an aluminum salt-containing silicic acid-based inorganic powder ("Allophosite" available from Shinagawa Chemicals Co., Ltd.) was suspended in the obtained LB culture medium so that the added allophane accounted for 0.5 %, 1 %, 2 %, and 4 % (W/V), and agitated at 30°C for 18 hours. Then, the suspensions were centrifuged (5800×g, 30 min), whereby supernatants were obtained. A zinc sulfate solution, 30 µL, was added to 120 µL of each obtained supernatant so that the obtained solutions had concentrations of zinc ions as shown in Table 2 below. Thus, LB culture media containing various antibacterial agents shown in Table 2 below were prepared. The zinc sulfate solution was prepared using zinc sulfate heptahydrate.

### <MIC determination test>

In each of the obtained LB culture media containing the antibacterial agents, 1 µL of Staphyloccocus aureus or Bacillus subtilis was inoculated and cultured at 27°C for 5 days. Microplates (96-well microplates, available Falcon) were used for the culturing of the microorganisms, and the growth of the microorganisms was checked by determination of absorbance at 620 nm with a microplate reader (Multisckan Ascent available from Labsystems). Determined absorbance values (absorbance values at 620 nm) are shown in Table 2 below. As the microorganisms to be inoculated, those prepared as follows were used: microorganisms of each type were cultured under agitation at 27°C for 18 hours in a 5 mL of an ordinary bouillon culture medium (available from Eiken Chemical Co., Ltd.), then, 1 mL of the same was sampled and centrifuged at 10000 rpm for 5 minutes, sediments were suspended in 1 ml of a 0.85 % saline solution, and the suspension was further diluted to 100 times.

### Comparative Example 5

LB culture media containing the various antibacterial agents shown in Table 2 below, respectively, were prepared in the same manner as that in Example 2 except that the concentration of zinc ions was set to 0 mg/L. Then, the MIC determination test was carried out in the same manner as that in Example 2. Results of the test are shown in Table 2 below.

### Comparative Example 6

LB culture media containing the various antibacterial agents shown in Table 2 below, respectively, were prepared in the same manner as that in Example 2 except that the added allophane was set to 0 % (W/V). Then, the MIC determination test was carried out in the same manner as that in Example 2. Results of the test are shown in Table 2 below.

### Comparative Example 7

LB culture media containing the various antibacterial agents were prepared in the same manner as that in Example 2 except that the concentration of zinc ions was set to 0 mg/L and the added allophane was set to 0 % (W/V). Then, the MIC determination test was carried out in the same manner as that in Example 2. Results of the test are shown in Table 2 below.

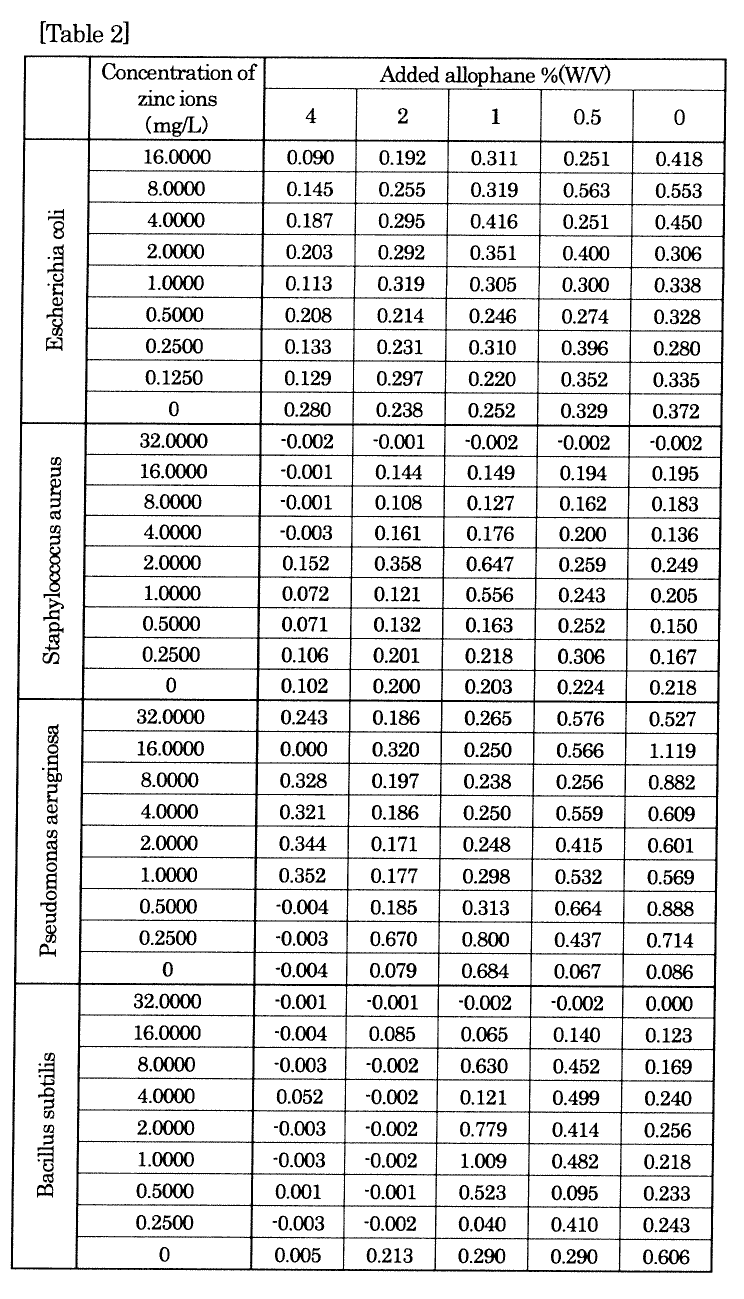

As is clear from Table 2, in the case where a phosphorus-adsorbing material, specifically allophane as an aluminum salt-containing silicic acid-based inorganic powder, was mixed, the antibacterial property of the zinc-containing compound was improved. For example, as to the antibacterial property against Staphyloccocus aureus, when allophane was not contained, the MIC of zinc ions was 32 mg/L. On the other hand, when 4 % (W/V) of allophane was contained, the MIC of zinc ions decreased to 4 mg/L, i.e., about 1/8. Besides, when allophane was mixed, the MICs of zinc ions as to Bacillus subtilis also decreased; more specifically, the MICs of zinc ions decreased to about 1/2 to 1/128, though the decrease varied with the added amount of allophane.

### Example 3

### <Preparation of LB culture medium>

An LB culture medium was prepared in the same manner as that in Example 1.

### <Preparation of LB culture media containing antibacterial agents>

Allophane as an aluminum salt-containing silicic acid-based inorganic powder was suspended in the obtained LB culture medium so that the added allophane accounted for 0.5 %, 1 %, 2 %, and 4 % (W/V), and agitated at 30°C for 18 hours. Then, the suspensions were centrifuged (5800xg, 30 min), whereby supernatants were obtained. A copper sulfate solution, 30 µL, was added to 120 µL of each obtained supernatant so that the obtained solutions had concentrations of copper ions as shown in Table 3 below. Thus, LB culture media containing various antibacterial agents shown in Table 3 below were prepared. The copper sulfate solution was prepared using copper sulfate pentahydrate.

### <MIC determination test>

In each of the obtained LB culture media containing the antibacterial agents, 1 µL of Staphyloccocus aureus or Bacillus subtilis was inoculated and cultured at 27°C for 5 days. Microplates (96-well microplates, available Falcon) were used for the culturing of the microorganisms, and the growth of the microorganisms was checked by determination of absorbance at 620 nm with a microplate reader (Multisckan Ascent available from Labsystems). Determined absorbance values (absorbance values at 620 nm) are shown in Table 3 below. As the microorganisms to be inoculated, those prepared as follows were used: microorganisms of each type were cultured under agitation at 27°C for 18 hours in a 5 mL of an ordinary bouillon culture medium (available from Eiken Chemical Co., Ltd.), then, 1 mL of the same was sampled and centrifuged at 10000 rpm for 5 minutes, sediments were suspended in 1 ml of a 0.85 % saline solution, and the suspension was further diluted to 100 times.

### Comparative Example 8

LB culture media containing the various antibacterial agents shown in Table 3 below, respectively, were prepared in the same manner as that in Example 3 except that the concentration of copper ions was set to 0 mg/L. Then, the MIC determination test was carried out in the same manner as that in Example 3. Results of the test are shown in Table 3 below.

### Comparative Example 9

LB culture media containing the various antibacterial agents shown in Table 3 below, respectively, were prepared in the same manner as that in Example 3 except that the added allophane was set to 0 %. Then, the MIC determination test was carried out in the same manner as that in Example 3. Results of the test are shown in Table 3 below.

### Comparative Example 10

LB culture media containing the various antibacterial agents were prepared in the same manner as that in Example 3 except that the concentration of copper ions was set to 0 mg/L and the added allophane was set to 0 %. Then, the MIC determination test was carried out in the same manner as that in Example 3.
Results of the test are shown in Table 3 below.

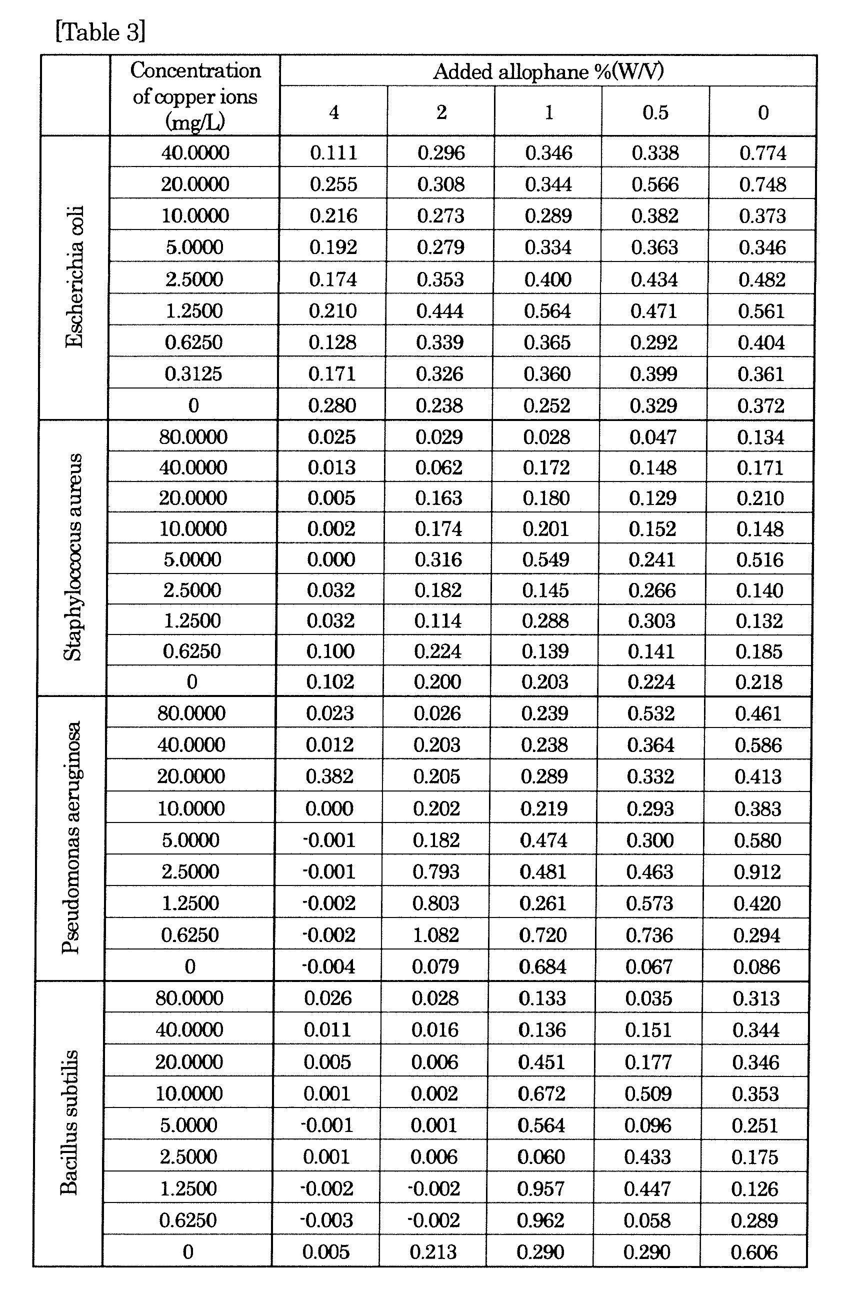

As is clear from Table 3, in the case where a phosphorus-adsorbing material, specifically allophane as an aluminum salt-containing silicic acid-based inorganic powder, was mixed, the antibacterial property of the copper-containing compound was improved. For example, as to the antibacterial property against Staphyloccocus aureus, when allophane was not contained, the MIC of copper ions was beyond 80 mg/L. On the other hand, when 4 % (W/V) of allophane was contained, the MIC of copper ions decreased to about 1.25 mg/L. Besides, as to the antibacterial property against Bacillus subtilis, when allophane was not mixed, the MIC of copper ions was beyond 80 mg/L, whereas with 2 % (W/V) of allophane contained, the MIC of copper ions decreased to less than 0.625 mg/L.

Moreover, as is clear from Tables 2 and 3, when a phosphorus-adsorbing material was mixed in the zinc-containing compound or the copper-containing compound, the antibacterial properties against Escherichia coli and Pseudomonas aeruginosa did not improve, whereas the antibacterial properties against Staphyloccocus aureus and Bacillus subtilis improved. On the other hand, as is clear from Table 1, the use of the phosphorus-adsorbing material mixed in the silver-containing compound allowed the antibacterial properties against microorganisms of all types used in the MIC determination including Escherichia coli and Pseudomonas aeruginosa. In other words, it is clear that the use of the phosphorus-adsorbing material mixed in the silver-containing compound provided a superior effect of improving the antibacterial property, as compared with the use of another antibacterial metal-containing compound, such as a zinc-containing compound or a copper ion-containing compound.

### Example 4

### <Preparation of LB culture medium>

An LB culture medium was prepared in the same manner as that in Example 1.

### <Preparation of LB culture media containing antibacterial agents>

Allophane as an aluminum salt-containing silicic acid-based inorganic powder was suspended in the obtained LB culture medium so that the added allophane accounted for 1 %, 4 %, and 8 % (W/V), and agitated at 30°C for 18 hours. Then, the suspensions were centrifuged (5800×g, 30 min), whereby supernatants were obtained. A silver nitrate solution, 20 µL, was added to 460 µL of each obtained supernatant so that the obtained solutions had concentrations of silver ions as shown in Table 4 below. Thus, LB culture media containing various antibacterial agents shown in Table 4 below were prepared. It should be noted that the concentration of silver ions shown therein are the concentration of the same in the following liquid for use in a bactericidal effect determination test to which an Escherichia coli suspension had been added.

### <Bactericidal effect determination test>

An Escherichia coli suspension, 20 µL, was added to each of the obtained LB culture media containing the antibacterial agents, whereby liquids for use in the bactericidal effect determination test were obtained. The liquids were sampled, 50 µL each, at the start, one hour later, three hours later, and 24 hours later, and each sample was added to 4.95 mL of a LP diluent. Each resultant was diluted at four steps, ten times each, and the count of viable bacteria in 1 mL of each diluted liquid was determined by the pour plate method. The results of the determination are shown in Table 4 below. The Escherichia coli suspension used was a suspension obtained by culturing Escherichia coli under agitation at 27°C for 18 hours in a 5 mL of an ordinary bouillon culture medium (available from Eiken Chemical Co., Ltd.), then, sampling 1 mL of the same and centrifuging the sample at 10000 rpm for 5 minutes, thereafter, suspending sediments in 1 ml of a 0.85 % saline solution, and diluting the same to 10 times.

### Comparative Example 11

LB culture media containing the antibacterial agents were prepared in the same manner as that in Example 4 except that the concentration of silver ions was set to 0 mg/L. Then, the bactericidal effect determination test was carried out in the same manner as that in Example 4. Results of the test are shown in Table 4 below.

### Comparative Example 12

LB culture media containing the antibacterial agents were prepared in the same manner as that in Example 4 except that the added allophane was set to 0 %(W/V). Then, the bactericidal effect determination test was carried out in the same manner as that in Example 4. Results of the test are shown in Table 4 below.

**[Table 4]**

| Concentration of silver ions (mg/L) | Time(h) | Count of viable bacteria (cfu/mL) | | | |
|---|---|---|---|---|---|
| | | Added allophane %(W/V) | | | |
| | | 0 | 1 | 4 | 8 |
| 0 | 0 | - | - | - | 10,800,000 |
| | 1 | - | - | - | 212,000 |
| | 3 | - | - | - | 690,000 |
| | 24 | - | - | - | 920,000,000 |
| 1 | 0 | 10,800,000 | 10,800,000 | 10,800,000 | 10,800,000 |
| | 1 | 14,900,000 | 52,000 | 1,100 | 1,000 or less |
| | 3 | 3,930,000 | 3,500 | 1,000 or less | 1,000 or less |
| | 24 | 95,000,000 | 2,600 | 1,000 or less | 1,000 or less |
| 5 | 0 | 10,800,000 | 10,800,000 | 10,800,000 | 10,800,000 |
| | 1 | 6,000,000 | 1,000 or less | 1,000 or less | 1,000 or less |
| | 3 | 29,000 | 1,000 or less | 1,000 or less | 1,000 or less |
| | 1,000 or less | 1000 or less | 1,000 or less | 1,000 or less | 1,000 or less |

As is clear from Table 4, in the case where a phosphorus-adsorbing material, specifically allophane as an aluminum salt-containing silicic acid-based inorganic powder, was mixed, the antibacterial property of the silver-containing compound was improved. For example, in the case where the concentration of silver ions was 1 mg/L, when 1 % (W/V) of allophane was contained, only few Escherichia coli were observed; and when 4 % or more of allophane was contained, the count of viable Escherichia coli was smaller than the detection limit (1000 cfu/ml). Further, in the case where the concentration of silver ions was 5 mg/L, when 1 % (W/V) or more of allophane was contained, the count of viable Escherichia coli was smaller than the detection limit (1000 cfu/ml). Still further, it is clear from Table 4 that when the concentration of silver ions was fixed, the bactericidal effect was higher as the amount of added allophane was greater; and that when the amount of added allophane was fixed, the bactericidal effect was higher as the concentration of silver ions was greater.

### Example 5

### <Preparation of LB culture medium>

An LB culture medium was prepared in the same manner as that in Example 1.

### <Preparation of LB culture media containing antibacterial agents>

Silver nitrate was dissolved in the obtained LB culture medium so that the concentration of silver ions was 1 mg/L, and further, the regenerated collagen powder obtained in Production Example 1 was suspended therein so as to be 4 % (W/V). The suspension was agitated at 30°C for 18 hours. Then, the suspension was centrifuged (5800xg, 30 min), whereby a supernatant, i.e., an LB culture medium containing an antibacterial agent, was prepared. It should be noted that the concentration of silver ions shown therein are the concentration of the same in the following liquid for use in a bactericidal effect determination test to which an Escherichia coli suspension had been added.

### <Bactericidal effect determination test>

An Escherichia coli suspension, 20 µL, was added to the obtained LB culture medium containing the antibacterial agent, whereby liquids for use in the bactericidal effect determination test were obtained. The liquid was sampled, 50 µL each, at the start, 0.25 hour later, one hour later, three hours later, and eight hours later, and each sample was added to 4.95 mL of a LP diluent. Each resultant was diluted at four steps, ten times each, and the count of viable bacteria in 1 mL of each diluted liquid was determined by the pour plate method. The results of the determination are shown in Table 5 below. The Escherichia coli suspension used was a suspension obtained by culturing Escherichia coli under agitation at 27°C for 18 hours in a 5 mL of an ordinary bouillon culture medium (available from Eiken Chemical Co., Ltd.), then, sampling 1 mL of the same and centrifuging the sample at 10000 rpm for 5 minutes, thereafter, suspending sediments in 1 ml of a 0.85 % saline solution, and diluting the same to 10 times.

### Comparative Example 13

An LB culture medium containing the antibacterial agent was prepared in the same manner as that in Example 4 except that the concentration of silver ions was set to 0 mg/L. Then, the bactericidal effect determination test was carried out in the same manner as that in Example 5. Results of the test are shown in Table 5 below.

### Comparative Example 14

An LB culture medium containing the antibacterial agent was prepared in the same manner as that in Example 5 except that the added regenerated collagen powder was set to 0 %. Then, the bactericidal effect determination test was carried out in the same manner as that in Example 5. Results of the test are shown in Table 5 below.

### Comparative Example 15

An LB culture medium containing the antibacterial agent was prepared in the same manner as that in Example 5 except that the added regenerated collagen powder was set to 0 % and the concentration of silver ions was set to 0 mg/L. Then, the bactericidal effect determination test was carried out in the same manner as that in Example 5. Results of the test are shown in Table 5 below.

**[Table 5]**

| Time (h) | Count of viable bacteria (cfu/mL) | | | |
|---|---|---|---|---|
| | Concentration of silver ions: 0 mg/L | | Concentration of silver ions: 1 mg/L | |
| | Added regenerated collagen powder % (W/V) | | Added regenerated collagen powder % (W/V) | |
| | 0 | 4 | 0 | 4 |
| 0.25 | - | 6.2×10⁷ | 8.1×10⁷ | 4.7×10⁴ |
| 1 | - | 1.1×10⁷ | 6.2×10⁷ | 9.9×10⁶ |
| 3 | - | 7.3×10⁵ | 6.7×10⁷ | 1.4×10⁵ |
| 8 | 6.3×10⁸ | 3.2×10⁴ | 2.4×10⁷ | 1.0×10³ or less |

As is clear from Table 5, in the case where a phosphorus-adsorbing material, specifically, the regenerated collagen powder, was mixed, the antibacterial property of the silver-containing compound was improved. For example, in the case where the concentration of silver ions was 1 mg/L, when 4 % (W/V) of the regenerated collagen powder was contained, the count of viable Escherichia coli was smaller than the detection limit (1000 cfu/ml).

### Description of Reference Numerals

- 1: electrospinning device
- 2: gastight enclosure
- 3: insulation plate
- 4: metal holder
- 5: metal nozzle
- 6: high-voltage power supply
- 7: solution feed pipe
- 8: another gastight enclosure
- 9: container
- 10: regenerated collagen solution
- 11: compressor
- 12: metal net
- 13: column
- 14: ground
- 15: charged micro-mist (regenerated collagen fibers)
- 20: spray nozzle
- 21: aqueous aluminum salt solution
- 22: wind-up cylinder

## Claims

1. An antibacterial agent comprising:
a metal-containing compound containing a metal other than aluminum; and
a phosphorus-adsorbing material.

2. The antibacterial agent according to claim 1, wherein the metal-containing compound is one or more metal-containing compounds selected from the group consisting of silver-containing compounds, zinc-containing compounds, and copper-containing compounds.

3. The antibacterial agent according to claim 1 or 2, wherein the metal-containing compound is a silver-containing compound.

4. The antibacterial agent according to any one of claims 1 to 3, wherein the phosphorus-adsorbing material is an aluminum compound.

5. The antibacterial agent according to claim 4,
wherein the aluminum compound is an aluminum-containing resin that contains a matrix resin component and an aluminum salt,
wherein the matrix resin component is at least one selected from regenerated collagen, polyvinyl alcohol, and carboxymethyl cellulose, and
the aluminum salt is bonded chemically with the matrix component.

6. The antibacterial agent according to any one of claims 1 to 5, wherein when the antibacterial agent is assumed to be 100 wt%, the metal-containing compound and the phosphorus-adsorbing material account for 0.0001 wt% to 99.9 wt%, and 0.1 wt% to 99.9999 wt%, respectively.

7. The antibacterial agent according to claim 1 or 6, wherein the phosphorus-adsorbing material is allophane.

8. A method of using an antibacterial agent for improving an antibacterial property of a metal-containing compound containing a metal other than aluminum, comprising use of the metal-containing compound and a phosphorus-adsorbing compound in combination.

9. The method of using an antibacterial agent according to claim 8, wherein the metal-containing compound is one or more metal-containing compounds selected from the group consisting of silver-containing compounds, zinc-containing compounds, and copper-containing compounds.

10. The method of using an antibacterial agent according to claim 8 or 9, wherein the metal-containing compound is a silver-containing compound.

11. The method of using an antibacterial agent according to any one of claims 8 to 10, wherein the phosphorus-adsorbing material is an aluminum compound.

12. The method of using an antibacterial agent according to claim 11,
wherein the aluminum compound is an aluminum-containing resin that contains a matrix resin component and an aluminum salt,
wherein the matrix resin component is at least one selected from regenerated collagen, polyvinyl alcohol, and carboxymethyl cellulose, and
the aluminum salt is bonded chemically with the matrix component.

13. The method of using an antibacterial agent according to any one of claims 8 to 12, wherein when the antibacterial agent is assumed to be 100 wt%, the metal-containing compound and the phosphorus-adsorbing material account for 0.0001 wt% to 99.9 wt%, and 0.1 wt% to 99.9999 wt%, respectively

14. The method of using an antibacterial agent according to claim 8 or 13, wherein the phosphorus-adsorbing material is allophane.
